# EUROPEAN PATENT SPECIFICATION

(11) **EP 3 240 392 B1**
(45) Date of publication and mention of the grant of the patent: **04.03.2020**
(21) Application number: 15841051.4
(22) Date of filing: 30.12.2015
(51) Int. Cl.: A01C 15/00, A01C 17/00

(54) **A CENTRIFUGAL SPREADER FOR FERTILIZERS AND MANURES**
SCHLEUDERSTREUER FÜR DÜNGER UND DUNG
ÉPANDEUR CENTRIFUGE POUR ENGRAIS ET FUMIER

(30) Priority: 30.12.2014 IT PD20140368
(43) Date of publication of application: 08.11.2017
(73) Proprietor: Maschio Gaspardo S.p.A., 35011 Campodarsego (PD) (IT)
(72) Inventor: BUSOLIN, Silvio, 35010 S. Giustina in Colle (PD) (IT)
(74) Representative: Locas, Davide
(86) International application number: PCT/IB2015/060048
(87) International publication number: WO 2016/108196

(56) References cited:
- EP-A1- 1 310 149
- EP-A2- 1 161 856
- EP-A2- 2 042 015
- WO-A1-03/039238
- DE-A1- 4 433 475

## Description

The present invention relates to a centrifugal spreader for fertilizers and manures, in particular in granular form, of the type comprising a hopper for collecting the material in granular form, a dispensing container which receives the material from the hopper, a distribution disc for distributing the material in granular form, and an adjustable deflector element.

In the relevant technical field there are known centrifugal spreaders for fertilizers, each comprising a hopper which collects the material in granular form to be distributed, a container placed under the hopper, into which the amount of material to be distributed is dispensed, and a rotating distribution disc, which receives the material dispensed via an outlet from the container in order to distribute it by means of a centrifugal force.

In order to adjust the range of the distribution disc, there is also a known way of using deflector fins located radially on the disc, in such a position as to intercept the trajectory of the distributed granular material and deflect it in a suitable manner.

Indeed, it should be understood that, when the manure is distributed in an area at the edge of a field the range must be limited, to prevent the manure from being distributed outside the field, since this would result in wastage of material and might also cause pollution, or more generally the spreading of manure where it is unwanted, in watercourses and on roads adjacent to the field or on land bordering on the field. On the other hand, it is desirable to have the maximum range in central areas, to speed up the distribution operation.

To achieve this effect of range adjustment, the patent EP 988 780 describes a manure spreading machine comprising fins which can be alternatively placed in an area adjacent to the distribution disc, so as to deflect the trajectory of the manure, or removed from this area, so as not to interfere with the material leaving the disc. A similar device is described in EP 1 106 045.

On the other hand, an alternative solution makes use of fins fixed in an orientable manner, so that the trajectory of the manure can be deflected in the most suitable way, according to the operating conditions.

For example, European Patent EP 1 161 856 refers to a manure spreader which uses fins each comprising a first portion rotatably fixed to a support frame and a second portion articulated on the first. This makes it possible to modify the angle of incidence of each fin portion relative to the trajectory of the manure leaving the disc, thereby providing the deflection required by different operating conditions.

Alternatively, EP 2 042 015 describes a manure spreading device comprising flexible fins, mounted with one end rigidly fixed to a support frame and the opposite end fixed to an element which is movable relative to the frame. The fins are placed in front of the distribution disc so as to interfere with the trajectory of the material. When the movable element is moved, the fins are flexed, thereby modifying the effect of the fins on the trajectory of the material leaving the distribution disc and modifying the angle of deflection. However, the known solutions have a number of drawbacks, particularly in respect of the procedures for adjusting the fins.

In the first case, the inclination of the fins cannot be adjusted, and it is only possible to move them away from the distribution disc so that they do not interfere with the trajectory of the manure.

In the second case, however, the solution is complicated in its construction, since the rotation of the two portions forming each fin must be controlled independently.

On the other hand, the last solution described above has a number of drawbacks regarding the need to use materials capable of providing sufficient flexibility, combined with mechanical strength and resistance to the wear caused by the passage of the granular material.

Furthermore, none of the known solutions allows differential adjustment of the individual fins by action on a single adjusting member. In other words, in the solutions described above, all the fins are actuated by the same adjustment member which is moved to cause the same rotation in all the fins.

Moreover, the known fin movement systems are not suitable for operation with motorized actuators, since they require relatively complex movements. The technical problem underlying the present invention is that of providing a centrifugal spreader for manures, fertilizers and granular material in general which is structurally and functionally designed to overcome the aforementioned drawbacks.

This problem is resolved by the present invention by means of a centrifugal spreader for manures, fertilizers and granular material in general, constructed according to Claim 1.

Preferred characteristics of the invention are defined in the dependent claims. The object of the present invention makes it possible to modify the trajectory of the material leaving the distribution disc according to specific requirements, by means of a solution which is simple in terms of construction, economical and robust.

Furthermore, the object of the present invention enables a different adjustment to be made for each fin, while providing a single member for the purpose of moving the fins.

Additionally, the object of to the present invention is particularly suitable for the use of a motorized system for moving the fins and adjusting them.

The characteristics and further advantages of the invention will be more clearly apparent from the following detailed description of a preferred, but non-exclusive, exemplary embodiment of the invention, illustrated, for guidance and in a non-limiting way, with reference to the attached drawings, in which:
- Figure 1 is a perspective view of a centrifugal spreader for manures, fertilizers and granular material in general, constructed according to the present invention;
- Figure 2 is a perspective view of a deflector unit and means for its movement, forming a detail of Figure 1;
- Figures 3A and 3B are two perspective views of the deflector unit of Figure 2, in a first and a second operating position respectively;
- Figures 4A, 4B and 4C are plan views of a distribution disc and of the deflector unit, showing the trajectories of the distributed material, in the first operating position, in an intermediate position, and in the second operating position, respectively;
- Figures 5A, 5B and 5C are perspective views of a detail of the deflector unit, in the first operating position, in the intermediate position, and in the second operating position, respectively;
- Figures 6A, 6B and 6C are perspective views of a detail of the deflector unit, in the first operating position, in the intermediate position, and in the second operating position, respectively;
- Figure 7 is a perspective view of an adjustable deflector fin, which is a detail of the deflector unit of Figure 2; and
- Figure 8 is a schematic illustration showing the movement of a deflector fin between the first and second operating position.

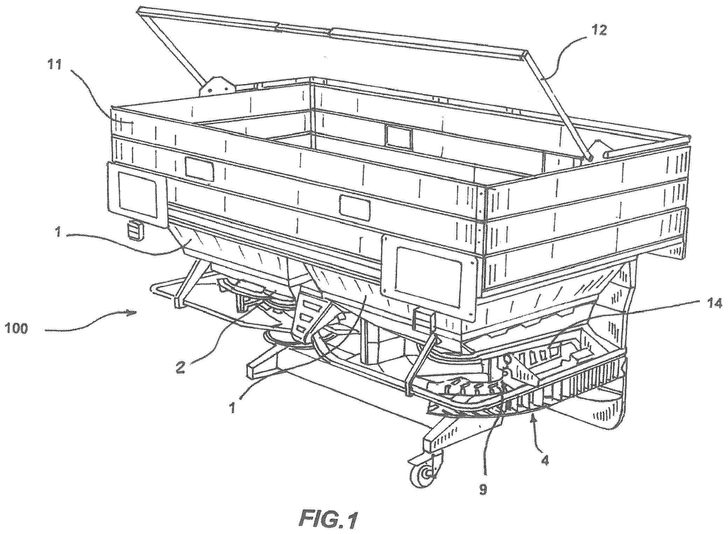

With reference to Figure 1 initially, the number 100 indicates the whole of a centrifugal spreader for manures, fertilizers and granular materials in general, constructed according to the present invention.

The spreader 100 is, for example, of the type suitable for fastening to a three-point linkage of a tractor, and comprises a pair of hoppers 1 to contain the granular material for distribution. Preferably, the spreader 100 also comprises an upper bin 11, to the bottom of which the two hoppers 1 are connected. According to a preferred embodiment, the bin 11 comprises a covering element 12, which controls the movement of a cover sheet, not shown in the figure.

As will be more apparent below, the hoppers 1 have symmetrical characteristics, and therefore reference will be made to only one of the two hoppers below, on the understanding that the same details are applicable to the other hopper. It is also to be understood that the principles described below can also be applied in an equivalent manner to spreaders using a single hopper.

The spreader 100 further comprises a dispensing container 2, located in a lower area of each hopper 1.

The dispensing container 2 receives the granular material from the hopper 1, and comprises at least one outlet opening, not visible in the figure, for the controlled exit of the granular material. In the context of the present invention, the term "controlled exit" indicates that the material is made to flow out of the container 2 while its amount is controlled, this amount being regulated by suitable regulating means not shown in the figure. These regulating means are of a known type, and are therefore not described in greater detail below.

The spreader according to the present invention further comprises a distribution disc 3, placed under the dispensing container 2, which receives the material for distribution by the falling of the material through the outlet opening.

The distribution disc 3 is rotated in such a way that the material leaving the opening of the dispensing container 2 can be distributed radially by a centrifugal force produced by the rotation of the disc 3.

The spreader according to the present invention further comprises a deflector unit 4, placed in front of the distribution disc 3. In particular, the deflector unit 4 is positioned in such a way that the material thrown from the distribution disc by centrifugal force follows a trajectory leading towards the deflector unit 4.

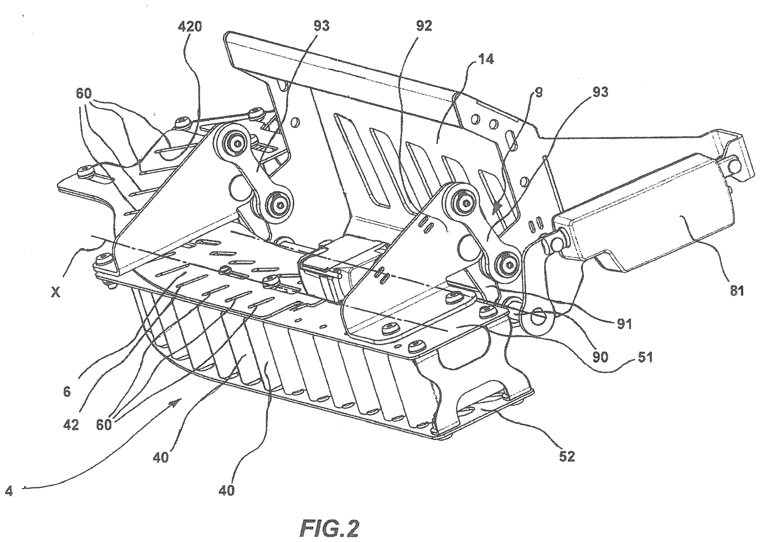

Thus, with reference to Figure 2 again, the deflector unit 4 preferably comprises a support frame and a plurality of adjustable deflector fins 40 connected thereto.

The deflector fins 40 are positioned in such a way that the granular material, passing between the fins, can be deflected in its trajectory as a result of its impact on the fins, or can have its trajectory unaltered if there is no impact.

Preferably, the deflector fins 40 have a substantially flat development and are parallel to the axis of rotation of the distribution disc 3. Thus, when the distributed material strikes a fin, the trajectory of its motion is deflected mainly within a horizontal plane, and then continues towards the ground, solely by the action of the force of gravity.

According to a preferred embodiment, the deflector unit 4 is connected to a frame of the spreader 100 by means of a support structure 14 which allows it to move a vertical direction. It should be noted that, in the context of the present description, the horizontal and vertical directions are defined in a unique manner by the ground on which the spreader is made to advance during the operations of manure distribution.

Preferably, as shown in Figure 2, the deflector unit 4 is supported on the support structure 14 by means of a quadrilateral mechanism 9.

Thus the deflector unit 4 can advantageously be raised and lowered by rotating a shaft 90 driven by a motorized actuator 81. The shaft 90 is connected to a crank 91 to which a support plate 92 of the deflector unit 4 is rotatably connected. The plate 92 is, in turn, connected to a link 93 which completes the quadrilateral mechanism 9.

Because of this movement system, the deflector unit 4 can be alternatively lowered, so as to be brought to the height of the distribution disc 3, or in any case the height of the trajectory of the material distributed by the disc, or raised, in such a way that the fins 40 do not interfere with the trajectory followed by the material.

This solution has proved to be particularly simple and reliable, and also easily drivable and controllable by means of the motorized actuator 81, of an electrical or hydraulic type for example.

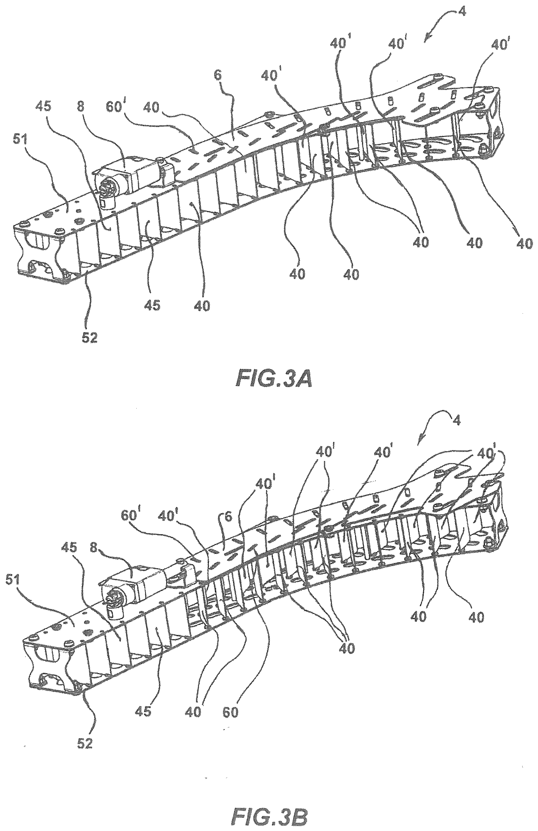

With reference to Figures 3A and 3B, the fins 40 of the deflector unit 4 are fixed so that they can be oriented in a first operating position, shown in Figure 3A, and a second position shown in Figure 3B.

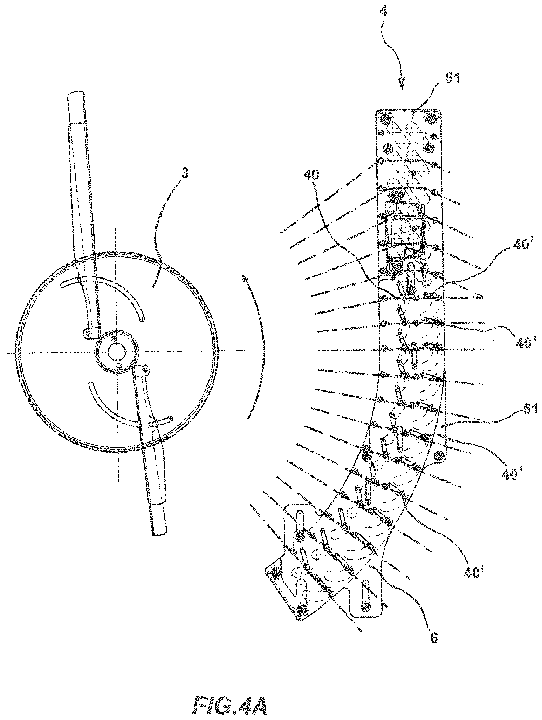

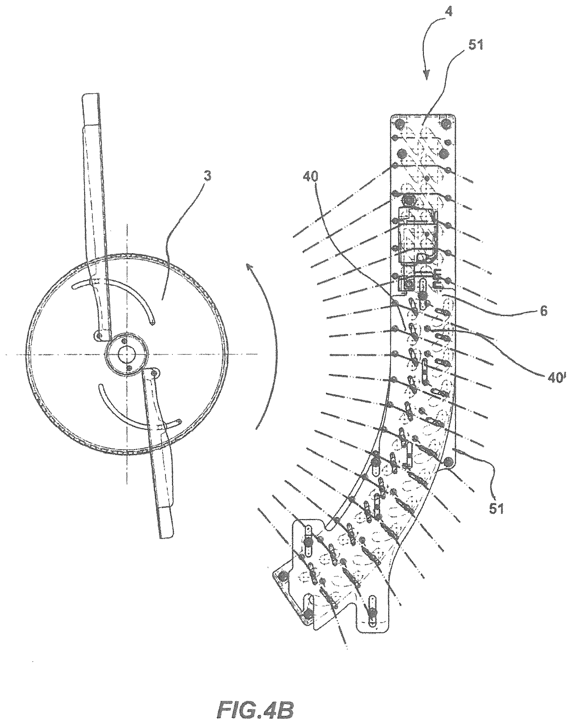

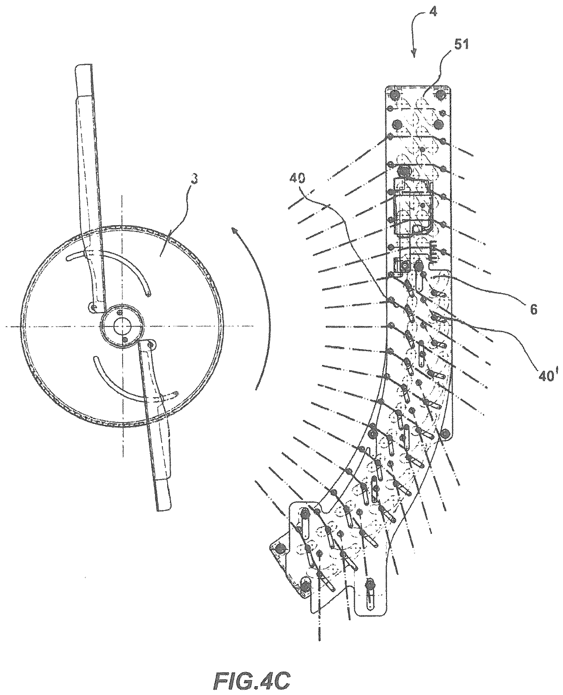

In the first operating position, the fins 40 are oriented so as to interfere to the least possible extent with the trajectory of the material distributed by the disc 3, as can also be seen in the schematic representation in Figure 4. According to a preferred embodiment, in this operating position the fins 40 are oriented substantially parallel to the trajectory of the material leaving the disc 3, or in any case as closely as possible to this direction.

It should be noted that, preferably, the deflector unit comprises first adjustable deflector fins 40 and second adjustable deflector fins 40', arranged in two radially adjacent rows relative to the distribution disc 3. In other words, the material distributed by the disc 3 is first intercepted or deflected by the row of first deflector fins 40, and then intercepted or deflected by the row of second fins 40'.

As will be more apparent from the following description, during the move between the first and second operating positions, the fins 40 and 40' may undergo different rotations, thus providing, in combination, the desired deflection of the trajectory of the distributed material.

It should also be noted that, preferably, the fins 40 and the fins 40' are aligned in a respective straight portion followed by a respective curved portion, the latter having a curvature substantially concentric with that of the distribution disc 3. This enables a more uniform distribution of the material to be obtained.

Additionally, preferably, the deflector unit 4 comprises fixed deflector fins 45, located in the straight portion of the first and second rows of fins respectively. It should be understood, in this context, that it has been experimentally observed that the deflection of the trajectories is not necessary in this portion, and this characteristic makes it possible to simplify the structure and provide greater robustness of the deflector unit 4.

In the spreader 100 according to the present invention, the fins 40 and 40' can be rotated from the position shown in Figure 3A to the position of Figure 3B, in which the maximum deflection of the trajectory takes place, as can be observed in Figure 4C.

In greater detail, in the operating position of Figure 4C the material distributed by the disc 3 is first deflected by the first fins 40 and then deflected by the second fins 40'. This enables a large deflection of the trajectory to be obtained, while dividing this deflection into two smaller deflections and optimizing the overall dimensions.

Since the change between the two operating positions takes place by a rotation α of the fins 40 and 40', it is also possible to provide intermediate positions, such as that shown in Figure 4B, in which the fins have a rotation smaller than the angle α and consequently the total deflection of the distributed material is less than that shown in Figure 4C.

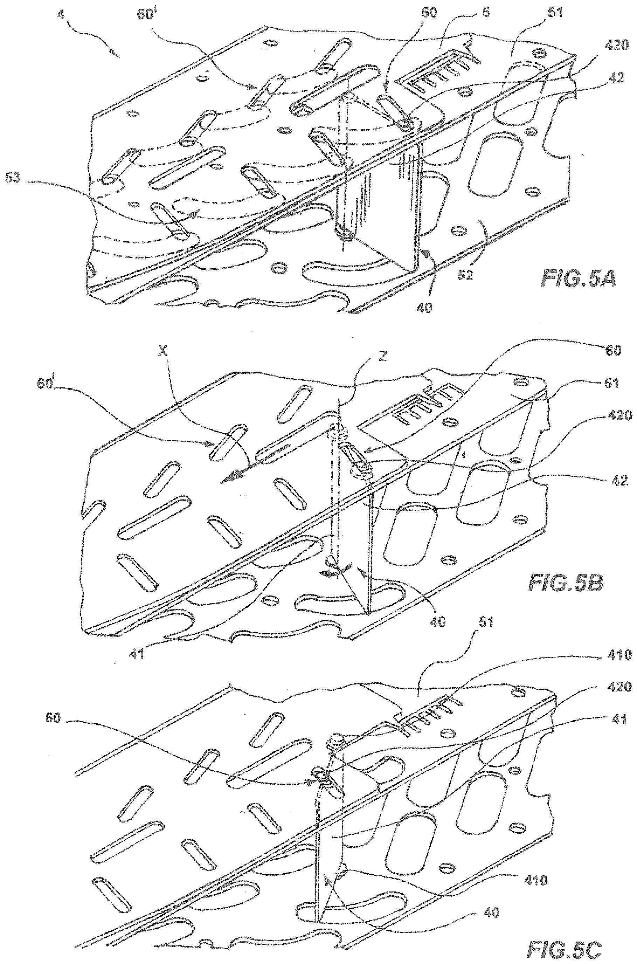

With additional reference to Figures 5A to 5C, in which, for greater clarity of presentation, only a single fin 40 is shown, the operation of the deflector unit 4 will now be described.

According to a preferred embodiment, the deflector unit 4 comprises a pair of plates 51, 52 forming a support frame, between which the fins 40, 40' and 45 are positioned.

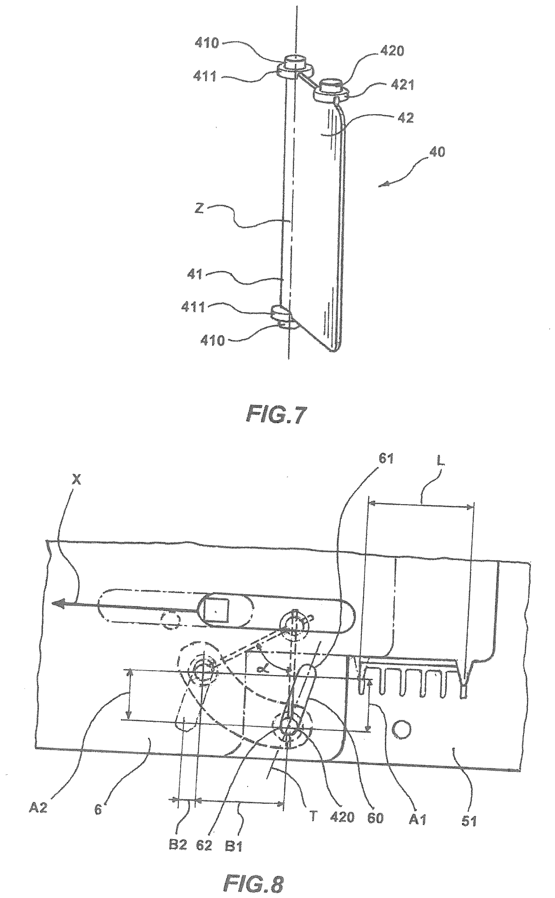

Each of the adjustable deflector fins 40, 40' comprises a first portion 41 rotatably connected to said support frame. Preferably, the first portion 41 is at one end of the fin, and has a pair of pivot pins 410, illustrated more fully in Figure 7, which are engageable in respective seats, not visible in the figure, formed in the plates 51 and 52. This enables the fin to rotate about an axis Z substantially perpendicular to the plates, and preferably parallel to the axis of rotation of the distribution disc 3.

According to a preferred embodiment, the pivot pins 410 also each comprise an enlarged portion 411 which meets the surface of the plate on which the seat is formed, thereby preventing vertical movement and acting as a bearing if necessary.

The fin 40 further comprises a second portion 42 slidably associated with a guide element 60 formed in an operating plate 6 which is movable relative to the support frame 51, 52 along a direction of translation X, while being rigidly fixed in respect of movements in the other directions.

According to a preferred embodiment, the guide element 60 is made in the form of a seat, preferably of the through type, formed in the operating plate 6, in which a second pivot pin 420, connected to the second portion 42, slides.

The operating plate 6 is therefore preferably slidable above the upper plate 51, which has through openings 53, each preferably extending along an arc of circumference.

The seat, or more generally the guide element 60, is shaped in such a way that the pivot pin 420, and consequently the second portion 42, is slidable in the guide element 60. In particular, in the present embodiment, the longitudinal extension of the seat defines a direction of sliding S which is transverse relative to the direction of translation X of the operating plate 6.

In other words, in the present embodiment the pivot pin 420 can slide within the seat 60. Evidently, however, alternative embodiments of the guide elements 60 may be provided.

Since the fin 40 is fixed in rotation to the support frame, the sliding of the pivot pin 420 in the slot 60 takes place only in combination with the movement of the operating plate 6 in the direction of translation X.

It can be seen, therefore, that, during a translation of the operating plate 6 in the direction of translation X, the guide element 60 acts on the pivot pin 420 and therefore on the second portion 42 so as to create a rotation α of the deflector fin 40, moving it between the first and the second operating position. Therefore, according to the angle of inclination formed between the direction of translation X and the direction of extension of the guide elements 60, corresponding to the direction of sliding S of the pivot pins 420, the fins 4 undergo a different rotation for the same distance of translation in the direction X of the operating plate 6.

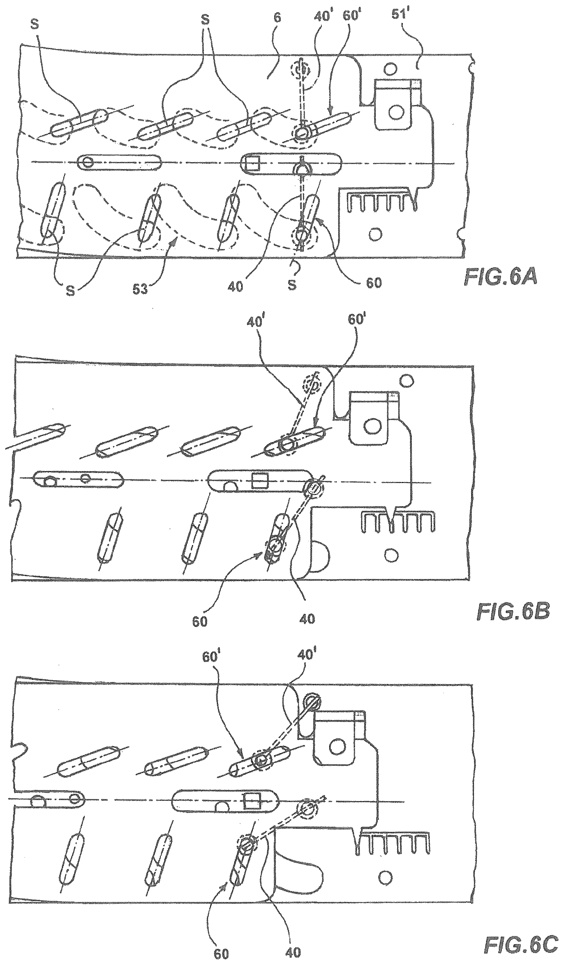

As can also be seen in Figures 6A - 6C, in which the rotation of a fin 40 is compared with a second fin 40', a greater inclination corresponds to a greater angle of rotation.

With reference to Figure 6A, according to a preferred embodiment, in the first operating configuration the fins 40 of the first row are parallel to the fins 40' of the second row.

Preferably, however, the guide elements 60 of the first row of fins 40, i.e. the inner row relative to the distribution disc 3, have a greater inclination with respect to the direction of translation X than the guide elements 60' of the second row of fins 40', i.e. the outer row. the distribution disc 3, have a greater inclination with respect to the direction of translation X than the guide elements 60' of the second row of fins 40', that is to say the outer row. Consequently, the translation of the operating plate 6 causes a greater rotation of the first fins 40 than of the second fins 40'.

It should be noted that, advantageously, the adjustment of the fins 40 and 40' can be made by the straight translation of a single component, represented in the present embodiment by the operating plate 6.

This makes it possible to use a simple linear actuator 8, shown in Figures 3A and 3B, for the adjustment of the deflector unit 4. Evidently, the same configuration can easily be adjusted manually by acting on a suitable control element, not shown in the figure, which enables the operating plate 6 to be moved.

However, although this simple adjustment is possible, the solution offered by the present invention makes it possible to differentiate the adjustment of each individual fin by the suitable design of the guide elements 60 and 60'.

Thus Figure 8 shows in detail the relationship between the inclination of the guide element 60 relative to the direction X and the rotation which the fin undergoes as a result of a translation L of the operating plate 6.

If the movement of the pivot pin 420 is broken down into two perpendicular components, indicated by the references A1 and B1 in the figure, which can easily be determined as a function of the angle α by using trigonometric functions, it is easy to determine the size and inclination of the guide element 60.

The two ends 61 and 62 of the guide element 60 are then spaced apart in one direction by a distance A2, equal to A1, while in the direction orthogonal to this direction they are spaced apart by B2, equal to L - B1, where L is the translation that the operating plate 6 can make.

Therefore, according to the angle α that each fin 40, 40' must make to provide the desired deflection of the trajectory, it is simply necessary to apply the relation described above in order to identify the correct inclination of the guide elements 60, 60'.

Consequently, as a result of the present invention it is possible to define the rotation of each fin in a simple and precise manner, while using a simple system for controlling them.

Thus the invention resolves the problem which was proposed, while providing a number of advantages. The main advantage offered by the invention lies in the fact that the fins can be rotated simply by acting on the operating plate, making it possible to provide a solution which is simple in terms of construction, economical and robust.

Furthermore, the movement of the operating plate enables the fins of each row to be moved according to the specific requirements dictated by the chosen operating width.

Additionally, the discovery according to the present invention enables a different adjustment to be made for each fin, while providing a single member for the purpose of moving the fins.

## Claims

1. A centrifugal spreader (100) for manures, fertilizers and granular materials in general, comprising:
- a hopper (1) for containing the granular material;
- a dispensing container (2) which receives the granular material from the hopper (1) and comprises at least one outlet opening for the controlled exit of the granular material;
- a distribution disc (3) which receives the granular material from the outlet opening;
- a deflector unit (4) which is, or can be, located in front of the distribution disc (3) with respect to a trajectory along which the granular material leaves the distribution disc (3), the deflector unit (4) comprising a support frame (51, 52) and a plurality of adjustable deflector fins (40, 40') connected to the support frame (51, 52),
**characterized in that** each of the adjustable deflector fins (40, 40') comprises a first portion (41) rotatably connected to the support frame (51, 52) about an axis of rotation (Z) and a second portion (42) slidably associated with a guide element (60) formed in an operating plate (6) which is movable relative to the support frame (51, 52) along a direction of translation (X), said direction of translation (X) being straight, the guide element (60) being shaped in such a way that the second portion (42) is slidable in the guide element (60) along a direction of sliding (S) which is straight and transverse relative to the direction of translation (X) of the operating plate (6), so that, during a translation of the operating plate (6) in the direction of translation (X), the guide element (60) acts on the second portion (42) so as to generate a rotation (a) of the adjustable deflector fins (40, 40') between a first and a second operating position.

2. A centrifugal spreader (100) according to Claim 1, wherein the guide element (60) is formed by a longitudinally extending seat formed on the operating plate (6), each of the fins comprising a pivot pin (420) which is slidable within the seat.

3. A centrifugal spreader (100) according to Claim 1 or 2, wherein the adjustable deflector fins (40, 40') are arranged in two rows with one following the other in a radial direction relative to the distribution disc (3).

4. A centrifugal spreader (100) according to Claim 3, wherein the fins of the first row are parallel to the fins of the second row, at least in an operating configuration of the operating plate (6).

5. A centrifugal spreader (100) according to Claim 3 or 4, wherein the guide elements (60) of an inner row of fins (40) have an inclination with respect to the direction of translation (X) of the operating plate (6) which is greater than that of the guide elements (60') of an outer row of fins (40').

6. A centrifugal spreader (100) according to Claim 4, wherein the operating plate (6) is slidable above an upper plate (51) of the frame, the upper plate (51) comprising through openings (53) each extending along an arc of a circumference having a centre corresponding to the axis of rotation (Z).

7. A centrifugal spreader (100) according to any one of the preceding claims, the operating plate (6) being driven in translation by means of a linear actuator (8).

8. A centrifugal spreader (100) according to any one of the preceding claims, wherein the deflector unit (4) is vertically movable.

9. A centrifugal spreader (100) according to Claim 8, wherein the deflector unit (4) is supported on a supporting structure (14) of the centrifugal spreader (100) by means of a quadrilateral mechanism (9).

10. A centrifugal spreader (100) according to any one of the preceding claims, wherein the deflector unit (4) further comprises fixed deflector fins (45) rigidly connected to the support frame (51, 52).

## Patentansprüche

1. Zentrifugalstreuer (100) für Dung, Düngemittel und körnige Materialien im Allgemeinen, umfassend:
- einen Trichter (1) zum Aufnehmen des körnigen Materials;
- einen Ausgabebehälter (2), der das körnige Material aus dem Trichter (1) aufnimmt und zumindest eine Auslassöffnung zum kontrollierten Austritt des körnigen Materials aufweist;
- eine Verteilerscheibe (3), die das körnige Material von der Auslassöffnung aufnimmt;
- eine Ablenkeinheit (4), die sich in Bezug auf eine Flugbahn, entlang der das körnige Material die Verteilerscheibe (3) verlässt, vor der Verteilerscheibe (3) befindet oder befinden kann, wobei die Ablenkeinheit (4) einen Tragrahmen (51, 52) und eine Vielzahl von einstellbaren Ablenklamellen (40, 40') umfasst, die mit dem Tragrahmen (51, 52) verbunden sind,
**dadurch gekennzeichnet, dass** jede der einstellbaren Ablenklamellen (40, 40') einen ersten Abschnitt (41), der mit dem Tragrahmen (51, 52) um eine Drehachse (Z) drehbar verbunden ist, und einen zweiten Abschnitt (42) umfasst, der mit einem Führungselement (60) verschiebbar verbunden ist, das in einer Betätigungsplatte (6) ausgebildet ist, die relativ zum Tragrahmen (51, 52) entlang einer Translationsrichtung (X) bewegbar ist, wobei die Translationsrichtung (X) gerade ist, wobei das Führungselement (60) so geformt ist, dass der zweite Abschnitt (42) im Führungselement (60) entlang einer Verschiebrichtung (S) verschiebbar ist, die gerade ist und quer zur Translationsrichtung (X) der Betätigungsplatte (6) verläuft, sodass, während einer Translation der Betätigungsplatte (6) in der Translationsrichtung (X), das Führungselement (60) auf den zweiten Abschnitt (42) einwirkt, um eine Drehung (α) der einstellbaren Ablenklamellen (40, 40') zwischen einer ersten und einer zweiten Betätigungsposition zu erzeugen.

2. Zentrifugalstreuer (100) nach Anspruch 1, wobei das Führungselement (60) durch einen sich in Längsrichtung erstreckenden Sitz gebildet ist, der auf der Betätigungsplatte (6) ausgebildet ist, wobei jede der Lamellen einen Schwenkstift (420) aufweist, der im Innern des Sitzes verschiebbar ist.

3. Zentrifugalstreuer (100) nach Anspruch 1 oder 2, wobei die einstellbaren Ablenklamellen (40, 40') in zwei aufeinanderfolgenden Reihen in radialer Richtung relativ zur Verteilerscheibe (3) angeordnet sind.

4. Zentrifugalstreuer (100) nach Anspruch 3, wobei die Lamellen der ersten Reihe, zumindest in einer Betätigungskonfiguration der Betätigungsplatte (6), parallel zu den Lamellen der zweiten Reihe verlaufen.

5. Zentrifugalstreuer (100) nach Anspruch 3 oder 4, wobei die Führungselemente (60) einer inneren Reihe der Lamellen (40) eine Neigung in Bezug auf die Translationsrichtung (X) der Betätigungsplatte (6) aufweisen, die größer als die der Führungselemente (60') einer äußeren Reihe der Lamellen (40') ist.

6. Zentrifugalstreuer (100) nach Anspruch 4, wobei die Betätigungsplatte (6) oberhalb einer oberen Platte (51) des Rahmens verschiebbar ist, wobei die obere Platte (51) Durchgangsöffnungen (53) aufweist, die sich jeweils entlang eines Bogens eines Umfangs mit einem Mittelpunkt entsprechend der Drehachse (Z) erstrecken.

7. Zentrifugalstreuer (100) nach einem der vorhergehenden Ansprüche, wobei die Betätigungsplatte (6) mittels eines Linearantriebs (8) translatorisch angetrieben wird.

8. Zentrifugalstreuer (100) nach einem der vorhergehenden Ansprüche, wobei die Ablenkeinheit (4) vertikal bewegbar ist.

9. Zentrifugalstreuer (100) nach Anspruch 8, wobei die Ablenkeinheit (4) mittels eines viereckigen Mechanismus (9) an einer Tragstruktur (14) des Zentrifugalstreuers (100) abgestützt ist.

10. Zentrifugalstreuer (100) nach einem der vorhergehenden Ansprüche, wobei die Ablenkeinheit (4) ferner feststehende Ablenklamellen (45) aufweist, die mit dem Tragrahmen (51, 52) starr verbunden sind.

## Revendications

1. Épandeur centrifuge (100) pour fumiers, engrais et matériaux granulaires en général, comprenant :
- une trémie (1) pour contenir le matériau granulaire ;
- un réservoir distributeur (2) qui reçoit le matériau granulaire à partir de la trémie (1) et comprend au moins un orifice de sortie pour la sortie régulée du matériau granulaire ;
- un disque de distribution (3) qui reçoit le matériau granulaire à partir de l'orifice de sortie ;
- une unité de déviation (4) qui est, ou peut être, située devant le disque de distribution (3) par rapport à une trajectoire le long de laquelle le matériau granulaire quitte le disque de distribution (3), l'unité de déviation (4) comprenant un cadre de support (51, 52) et une pluralité d'ailettes de déflecteur réglables (40, 40') reliées au cadre de support (51, 52),
**caractérisé en ce que** chacune des ailettes de déflecteur réglables (40, 40') comprend une première partie (41) reliée en rotation au cadre de support (51, 52) autour d'un axe de rotation (Z) et une seconde partie (42) associée en coulissement à un élément de guidage (60) formé dans une plaque de fonctionnement (6) qui est mobile par rapport au cadre de support (51, 52) le long d'une direction de translation (X), ladite direction de translation (X) étant droite, l'élément de guidage (60) étant façonné de telle manière que la seconde partie (42) peut coulisser dans l'élément de guidage (60) le long d'une direction de coulissement (S) qui est droite et transversale par rapport à la direction de translation (X) de la plaque de fonctionnement (6), de sorte que, pendant une translation de la plaque de fonctionnement (6) dans la direction de translation (X), l'élément de guidage (60) agit sur la seconde partie (42) de façon à générer une rotation (a) des ailettes de déflecteur réglables (40, 40') entre une première et une seconde position de fonctionnement.

2. Épandeur centrifuge (100) selon la revendication 1, dans lequel l'élément de guidage (60) est formé par un siège s'étendant longitudinalement formé sur la plaque de fonctionnement (6), chacune des ailettes comprenant un pivot (420) qui peut coulisser à l'intérieur du siège.

3. Épandeur centrifuge (100) selon la revendication 1 ou 2, dans lequel les ailettes de déflecteur réglables (40, 40') sont agencées en deux rangées avec l'une suivant l'autre dans une direction radiale par rapport au disque de distribution (3).

4. Épandeur centrifuge (100) selon la revendication 3, dans lequel les ailettes de la première rangée sont parallèles aux ailettes de la seconde rangée, au moins dans une configuration de fonctionnement de la plaque de fonctionnement (6).

5. Épandeur centrifuge (100) selon la revendication 3 ou 4, dans lequel les éléments de guidage (60) d'une rangée interne d'ailettes (40) ont une inclinaison par rapport à la direction de translation (X) de la plaque de fonctionnement (6) qui est supérieure à celle des éléments de guidage (60') d'une rangée externe d'ailettes (40').

6. Épandeur centrifuge (100) selon la revendication 4, dans lequel la plaque de fonctionnement (6) peut coulisser au-dessus d'une plaque supérieure (51) du cadre, la plaque supérieure (51) comprenant des orifices de passage (53) s'étendant chacun le long d'un arc d'une circonférence ayant un centre correspondant à l'axe de rotation (Z).

7. Épandeur centrifuge (100) selon l'une quelconque des revendications précédentes, la plaque de fonctionnement (6) étant entraînée en translation au moyen d'un actionneur linéaire (8).

8. Épandeur centrifuge (100) selon l'une quelconque des revendications précédentes, dans lequel l'unité de déviation (4) est mobile verticalement.

9. Épandeur centrifuge (100) selon la revendication 8, dans lequel l'unité de déviation (4) est supportée sur une structure de support (14) de l'épandeur centrifuge (100) au moyen d'un mécanisme quadrilatéral (9).

10. Épandeur centrifuge (100) selon l'une quelconque des revendications précédentes, dans lequel l'unité de déviation (4) comprend en outre des ailettes de déflecteur fixes (45) reliées rigidement au cadre de support (51, 52).
